(19) **Europäisches Patentamt**
**European Patent Office**
**Office européen des brevets**

(11) **EP 4 481 655 A1**

(12) **EUROPEAN PATENT APPLICATION**

(43) Date of publication:
**25.12.2024 Bulletin 2024/52**

(21) Application number: **23180178.8**

(22) Date of filing: **19.06.2023**

(51) International Patent Classification (IPC):
**G06Q 20/02** (2012.01)   **G06Q 20/06** (2012.01)
**G06Q 20/38** (2012.01)   **G06Q 20/40** (2012.01)

(52) Cooperative Patent Classification (CPC):
**G06Q 20/4016; G06Q 20/027; G06Q 20/065; G06Q 20/389**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Mastercard International Incorporated Purchase, NY 10577 (US)**

(72) Inventors:
• **TANEJA, Mohit**
  **Waterford, X91 C521 (IE)**

• **NICHOLLS, Jack**
  **Dublin, A94 C3C6 (IE)**
• **CONWAY, James**
  **Dublin, D12 CH63 (IE)**
• **FLINTER, Stephen Patrick**
  **Dublin, 6W (IE)**
• **KOTHALE, Nitish**
  **Dublin, D01 PX81 (IE)**
• **HOLLAND, Shannon**
  **San Francisco, 94117 (US)**
• **MORAN, Weston**
  **Merrimack, 03054 (US)**

(74) Representative: **Keltie LLP**
  **No. 1 London Bridge**
  **London SE1 9BA (GB)**

(54) **PREDICTING WHETHER A TRANSACTION OF A DIGITAL CURRENCY STORED IN A BLOCKCHAIN IS FRAUDULENT**

(57)    A computer implemented method of training a model, using a machine learning process, to predict whether a transaction of a digital currency stored in a blockchain is fraudulent, comprises: obtaining (202) transaction data for a first transaction of first funds in the digital currency, wherein the transaction data further comprises information related to a second transaction of the first funds that preceded the first transaction. The method further comprises labelling (204) the transaction data for the first transaction according to whether the first transaction was fraudulent and using (206) the transaction data and the label as training data with which to train the model.

**EP 4 481 655 A1**

Fig. 2

## Description

### FIELD OF DISCLOSURE

The present disclosure relates generally to transactions of digital currencies stored in blockchain. More specifically but not exclusively, the disclosure relates to predicting whether a transaction of a digital currency stored in a blockchain is fraudulent.

### BACKGROUND

Blockchain cryptocurrencies are generally considered to be secure currencies, since their structure is designed to provide an immutable ledger of transactions, which are recorded and stored in a distributed manner across a network. However, because leading cryptocurrency blockchain protocols use pseudonymous operational systems where user identities remain hidden, these have increasingly been used for illicit purposes, such as for purchasing illicit items on darknet marketplaces.

Although the majority of blockchain cryptocurrency transactions are linked to non-fraudulent, licit activity, cryptocurrency related crime has been a major concern of governments and regulatory bodies worldwide. In particular, crypto exchanges are key points of interest in cryptocurrency networks, as these are used by criminals to launder funds gained from illicit cryptocurrency transactions (e.g., obtained from ransomware) and obtain fiat currency (e.g. a government backed currency). Therefore, regulation has been introduced requiring cryptocurrency exchanges to perform measures such as Know Your Customer (KYC) checks on customers engaging in cryptocurrency trading and purchasing.

Currently, there are several public resources that provide information on some of the addresses associated with illicit or fraudulent cryptocurrency activity. Examples of these are: ESET, Kaspersky Lab, Malwarebytes, and Symantec. However, each block in a cryptocurrency blockchain can contain thousands of transactions. As an example, a single Bitcoin block can accommodate around 2,700 transactions on average, and there are over 770,000 blocks on the Bitcoin blockchain. Furthermore, each transaction (e.g. transfer of funds) can involve lots of different inputs (wallets or addressees transferring funds) and outputs (wallets or addresses receiving the transferred funds). A Bitcoin transaction can contain up to 2000 inputs and outputs and analysing these for fraudulent activity is computationally expensive.

### Summary

As described in the background above, identifying fraudulent transactions in blockchain-based cryptocurrencies such as bitcoin is an on-going area of research interest.

Bitcoin transactions can currently be labelled as fraudulent in a heuristic manner by analysing the input and output addressees (or wallets) involved in the transaction. However as noted above, there can be up to 2000 inputs and outputs to any individual transaction, and each of those inputs and outputs may have over 100 features (e.g. individual columns of data) associated with it. This makes heuristic methods of labelling transactions as fraudulent based e.g. on addressee characteristics, cumbersome and untenable in real-time. Thus, it is an object of embodiments herein to develop systems and methods that can be used in real-time to assess whether transaction data for a transaction is fraudulent and that can be used, for example, as part of an authorisation process.

Thus, according to a first aspect herein there is a computer implemented method of training a model, using a machine learning process, to predict whether a transaction of a digital currency stored in a blockchain is fraudulent. The method comprises obtaining transaction data for a first transaction of first funds in the digital currency, wherein the transaction data comprises information related to a second transaction of the first funds that preceded the first transaction and labelling the transaction data for the first transaction according to whether the first transaction was fraudulent. The method then comprises using the transaction data and the label as training data with which to train the model.

According to a second aspect herein there is a computer implemented method for predicting whether a new transaction of second funds of a digital currency stored in a blockchain is fraudulent. The method comprises: obtaining transaction data for the new transaction and information related to a third transaction of the second funds that preceded the new transaction, providing the transaction data to a model trained using a machine learning process, and receiving from the model as output, a prediction of whether the new transaction is fraudulent.

According to a third aspect herein there is a node in a computing network for training a model, using a machine learning process, to predict whether a transaction of a digital currency stored in a blockchain is fraudulent, wherein the node is configured to obtain transaction data for a first transaction of first funds in the digital currency, wherein the transaction data comprises information related to a second transaction of the first funds that preceded the first transaction, label the transaction data for the first transaction according to whether the first transaction was fraudulent; and use the transaction data and the label as training data with which to train the model.

According to a fourth aspect there is a node in a computing network for training a model, using a machine learning process, to predict whether a transaction of a digital currency stored in a blockchain is fraudulent. The node comprises a memory comprising instruction data representing a set of instructions; and a processor configured to communicate with the memory and to execute the set of instructions. The set of instructions, when executed by the processor, cause the processor to: obtain transaction data for a first transaction of first funds in the digital currency, wherein the transaction data comprises information related to a second transaction of the first funds that preceded the first transaction; label the transaction data for the first transaction according to whether the first transaction was fraudulent; and use the transaction data and the label as training data with which to train the model.

According to a fifth aspect there is a node in a computing network for predicting whether a new transaction of second funds of a digital currency stored in a blockchain is fraudulent, wherein the node is configured to: obtain transaction data for the new transaction and information related to a third transaction of the second funds that preceded the new transaction; provide the transaction data to a model trained using a machine learning process; and receive from the model as output, a prediction of whether the new transaction is fraudulent.

According to a sixth aspect there is a node in a computing network for predicting whether a new transaction of second funds of a digital currency stored in a blockchain is fraudulent, the node comprising: a memory comprising instruction data representing a set of instructions; and a processor configured to communicate with the memory and to execute the set of instructions, wherein the set of instructions, when executed by the processor, cause the processor to: obtain transaction data for the new transaction and information related to a third transaction of the second funds that preceded the new transaction; provide the transaction data to a model trained using a machine learning process; and receive from the model as output, a prediction of whether the new transaction is fraudulent.

According to a seventh aspect there is a computer program product comprising a computer readable medium, the computer readable medium having computer readable code embodied therein, the computer readable code being configured such that, on execution by a suitable computer or processor, the computer or processor is caused to perform the method of the first or second aspects.

This disclosure relates to selecting appropriate input parameters to a machine learning model so as to increase the accuracy of the resulting predictions. In particular, it has been recognised herein that whether a transfer of funds is fraudulent or not can often be linked to the chain of previous transactions that the funds have moved through. If the funds have previously been linked to fraudulent entities for example, then this may increase the probability that a transaction is fraudulent. As such, it has been recognised that information relating to neighbouring transactions may be input to a machine learning model to increase the accuracy of predictions output by the model of whether a transaction is fraudulent.

**Brief Description of the Drawings**

Fig. 1 illustrates an example computing node suitable for implementing embodiments of the present disclosure.

Fig. 2 shows an example method of training a model according to embodiments of the present disclosure.

Fig. 3 shows an example manner of unpacking transaction data stored in a block of a blockchain according to some embodiments herein.

Fig. 4a shows example input and output rows of transaction data for an example transaction.

Fig. 4b shows example aggregated transaction data for the example input and output rows of transaction data shown in Fig. 4a.

Fig. 5 is a schematic diagram showing example steps of a method for obtaining an aggregated transaction table according to embodiments of the present invention.

Fig. 6 is a schematic diagram showing example steps of a method of training a model according to some examples herein.

Fig. 7 shows an example method of using a model to identify fraudulent transactions according to some embodiments herein.

Fig. 8 shows an example transaction, and neighbouring transactions thereof.

**Detailed Description**

As described above in the summary section, the disclosure herein relates to predicting whether a transaction of a digital currency (e.g. a cryptocurrency) is fraudulent, using machine learning. In particular, in a transaction involving first funds, such as particular bitcoins, the disclosure herein relates to the use of data relating to previous transactions of the (same) first funds, to predict whether the current transaction is fraudulent. This represents feature enhancement compared to models not using previous transaction data and captures more information which can be used by a model to predict whether a transaction is fraudulent.

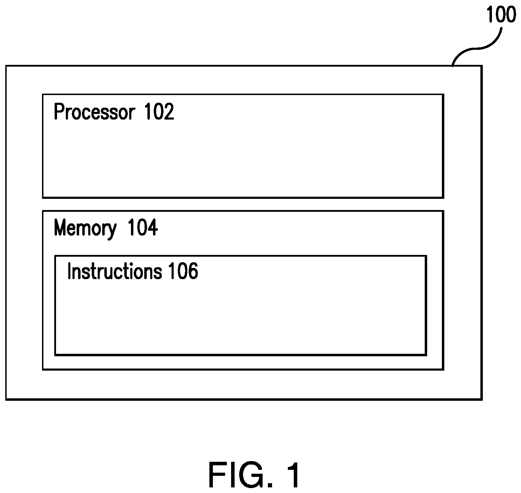

Fig. 1 shows a node (e.g. a computing node) according to some embodiments herein. The node 100 may generally be configured (e.g. operative) to perform any of the methods and functions described herein, such as the method 200 and the method 700 described in detail below.

In some embodiments, the node 100 comprises a processor 102, a memory 104 and set of instructions 106. The memory holds instruction data (e.g. such as compiled code) representing set of instructions 106. The processor may be configured to communicate with the memory and to execute the set of instructions. The set of instructions, when executed by the processor, may cause the processor to perform any of the methods herein, such as the method 200 or the method 700 described below.

Processor (e.g. processing circuitry or logic) 102 may be any type of processor, such as, for example, a central processing unit (CPU), a Graphics Processing Unit (GPU), a Neural Processing Unit (NPU), or any other type of processing unit. Processor 102 may comprise one or more sub-processors, processing units, multi-core processors or modules that are configured to work together in a distributed manner to control the node in the manner described herein.

The node 100 may comprise a memory 104. In some embodiments, the memory 104 of the node 100 can be configured to store program code or instructions that can be executed by the processor 102 of the node 100 to perform the functionality described herein. The memory 104 of the node 100, may be configured to store any data or information referred to herein, such as for example, requests, resources, information, data, signals, or similar that are described herein. The processor 102 of the node 100 may be configured to control the memory 104 of the node 100 to store such information.

In some embodiments, the node 100 may be a virtual node, e.g. such as a virtual machine or any other containerised computer node. In such embodiments, the processor 102 and the memory 104 may be portions of larger processing and memory resources respectively.

It will be appreciated that a computing node 100 may comprise other components to those illustrated in Fig 1. For example, node 100 may comprise a power supply (e.g. mains or battery power supply). The node 100 may further comprise a wireless transmitter and/or wireless receiver to communicate wirelessly with other computing nodes. In some embodiments, the node 100 may further comprise a user input device such as a mouse, keyboard, or touch pad, for receiving input user data. In some embodiments, the node 100 may further comprise a display for displaying any of the data described herein, such as for example, any of the outputs (or intermediate data products) of any of the methods described herein.

As described above, the node 100 is for use in predicting whether a transaction of a digital currency stored in a blockchain is fraudulent. Thus, in some embodiments, the node 100 may be in a peer-to-peer network involved in storing a blockchain. In other embodiments, as will be described in more detail below, the node 100 may be comprised in (or otherwise associated with) a currency exchange, for use in predicting whether transactions are fraudulent as part of a security processes used to authorise the transaction.

As noted above, in some embodiments, the node 100 is configured to train a model using a machine learning process, to predict whether a transaction of a digital currency stored in a blockchain is fraudulent. In brief, in such embodiments, the node 100 may be configured to obtain transaction data for a first transaction of first funds in the digital currency, wherein the transaction data further comprises information related to a second transaction of the first funds that preceded the first transaction. The node 100 may be further configured to label the transaction data for the first transaction according to whether the first transaction was fraudulent. The node 100 may be further configured to use the transaction data and the label as training data with which to train the model.

The skilled person will be familiar with blockchain, but in brief, a blockchain is a distributed database that maintains a continuously growing list of ordered records, *e.g.*, blocks. Each block contains a cryptographic hash of the previous block, a timestamp and transaction data for the transactions captured in the block. In this way, a chain is created. The blockchain is stored in a decentralized, distributed and public digital ledger that is used to record transactions across a peer-to-peer network. Each server in the distributed system stores a copy of the ledger and communicates with other servers in the distributed system to build a consensus of the transactions that have occurred. The record of the transactions cannot be altered retroactively without the alteration of all subsequent blocks and the consensus of the other servers in the peer-to-peer network. As such, over time, the blocks in a blockchain became fixed and unchanging (immutable). For more information, see the paper by Nofer, M., Gomber, P., Hinz, O. et al. entitled "Blockchain" Bus Inf Syst Eng 59, 183-187 (2017).

Embodiments herein relate to digital currencies stored in blockchain, which may otherwise be referred to herein as cryptocurrencies. The skilled person will be familiar with cryptocurrencies, which may be different to e.g. fiat currencies which are generally backed by government bodies and which may be transferred either digitally or using physical currency. Generally, the digital currency described herein may be a cryptocurrency based on the Unspent Transaction Output, UTxO design. UTxO is described in the paper entitled: "A Formal Model of Bitcoin Transactions" Atzei, N., Bartoletti, M., Lande, S., Zunino, R. (2018). See also Brünjes, L., Gabbay, M.J. (2020). See also: "UTxO- vs Account-Based Smart Contract Blockchain Programming Paradigms. In: Margaria, T., Steffen, B. (eds) Leveraging Applications of Formal Methods, Verification and Validation: Applications". ISoLA 2020. Lecture Notes in Computer Science(), vol 12478. Springer, Cham. Examples of non-privacy coin examples that use UTxO include, but are not limited to: Bitcoin, Bitcoin cash and Litecoin. The skilled person will be familiar with bitcoin, which is discussed, for example, in the paper by Böhme, Rainer, Nicolas Christin, Benjamin Edelman, and Tyler Moore. 2015, entitled: "Bitcoin: Economics, Technology, and Governance." Journal of Economic Perspectives, 29 (2): 213-38. See also the white paper entitled: "Bitcoin: A Peer-to-Peer Electronic Cash System" by Satoshi Nakamoto, October 31, 2008.

The disclosure herein relates to transactions. A transaction in this sense is a transfer of funds (e.g. items of currency) on the blockchain from a first entity to a second entity. In this sense an entity may be an owner of the funds on the blockchain. An entity may otherwise be referred to herein as an addressee. Digital currency may be held in a wallet belonging to an entity or addressee. As such, a transaction may be described as a transfer of funds from a first wallet to a second wallet.

Cryptocurrency transactions may be described as illicit or fraudulent for many reasons. For example, a transaction may be fraudulent if it involves entities that have been involved in illegal activities, or involves a transfer of funds for an illegal reason, for example, including but not limited to money laundering; fraud; embezzlement; extortion; darknet market; and/or funds obtained through ransomware. In addition, transactions may be considered fraudulent or illicit if they include digital coins that originated from illegal transactions (such as the types listed above), even when the entities or wallets involved in the transaction are not directly linked to the illegal activities. It will be appreciated that these are merely examples and that a transaction may be labelled fraudulent for other reasons to those listed above.

In the present invention, predicting may involve estimating, by means of a model trained using a machine learning process, whether a transaction involves wallets or users that were involved in illicit activities, or if a transaction includes cryptocurrency originated from illicit activities. The prediction may be in the form of a label, such as for example, a binary label.

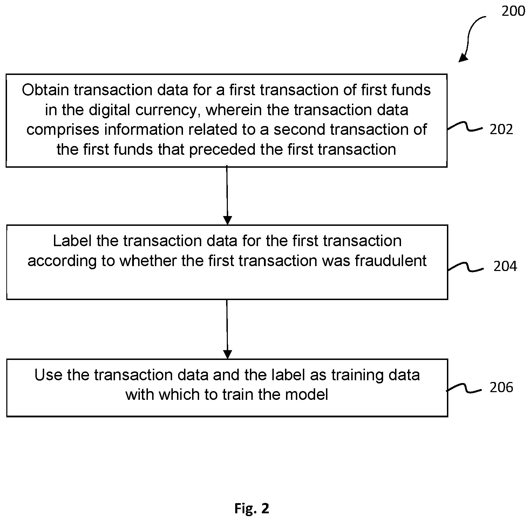

Fig. 2 shows a method of training a model, using a machine learning process, to predict whether a transaction of a digital currency stored in a blockchain is fraudulent. The method 200 is computer implemented and may be performed by a computing node such as the node 100 described above.

Briefly in a first step 202 the method 200 comprises obtaining transaction data for a first transaction of first funds in the digital currency, wherein the transaction data comprises information related to a second transaction of the first funds that preceded the first transaction. In a second step 204 the method 200 comprises labelling the transaction data for the first transaction according to whether the first transaction was fraudulent. In a third step 206 the method comprises using the transaction data and the label as training data with which to train the model.

The first funds refer to a first amount of the currency. For example, the transaction may involve a first plurality of bitcoins that are referred to herein as the first funds.

The method 200 thus describes a method of training a machine learning model using previous transactions of funds, to predict whether a (current or new) transaction of the same funds is fraudulent. Previous transactions of funds are often linked to whether a current transaction is fraudulent. For example, if funds have previously been owned by entities or addressees known to be involved in fraudulent activity, then it is more likely that the current transaction will also be fraudulent. Thus, it has been recognised herein that there is a causal connection between whether a current transaction is fraudulent and whether previous transactions of the same funds were fraudulent. In other words, the paper-trail of previous transactions of funds may provide an indication of whether a new transaction of the same funds is fraudulent. Thus, previous transaction data may be used by a machine learning model to predict whether a current transaction is fraudulent.

In more detail, the blockchain may be stored in the cloud. For example, in embodiments where the digital currency is bitcoin, Google Cloud may be used to store the blockchain data. Google Cloud data may be accessed using a query tool such as the "BigQuery" tool. This is described, for example in the paper: Bisong, E. (2019). Google BigQuery. In: Building Machine Learning and Deep Learning Models on Google Cloud Platform. Apress, Berkeley, CA. https://doi.org/10.1007/978-1-4842-4470-8_38. Suitable queries and methods for accessing the bitcoin data using BigQuery are described in the book: "Building Your Next Big Thing with Google Cloud Platform. A Guide for Developers and Enterprise Architects" by S. P. T. Krishnan , Jose L. Ugia Gonzalez.

In step 202 transaction data for a first transaction is obtained for use as training data with which to train the model. The first transaction may be a historical transaction e.g. a concluded transaction that has been added to the blockchain. Historical transaction data may be held in blocks of the blockchain stored, for example, in the cloud, Thus, in step 202, the method 200 may comprise obtaining a block in the blockchain, e.g. from a cloud storage such as Google Cloud.

The block may be a historical block containing transaction data of many historical (e.g. previously conducted) transactions such as the first transaction.

The data in the received block may be arranged in a tree-like structure (such as a Merkle Tree). In some embodiments, the block is stored in a NoSQL storage. Step 202 may therefore comprise unpacking said tree-like structure to present each transaction as a plurality of input and output rows of transaction data.

In Bitcoin, each block in the Bitcoin blockchain houses approximately 2,700 transactions and each transaction can have up to 2000 inputs and outputs. The inputs and outputs of a transaction contain information indicating which entities (e.g. which addresses or wallets) are transferring funds to which other addresses (e.g. which other addresses or wallets) in a transaction. Input transaction data is data related to an entity that is making a transfer of funds in a transaction. Output transaction data is data related to an entity that is receiving said funds in the transaction (e.g. the beneficiary/recipient of the transaction). There may be more than one input to a transaction because more than one wallet may contribute funds to a single transaction. There may also be more than one output to a transaction, because funds that are transferred may be split between two or more recipients of the transaction.

In some embodiments, step 202 may comprise unpacking a block in the blockchain into a table comprising one or more rows of input and output data for the first transaction stored in the block.

The unpacking, or unnesting of the data from the database (e.g., BigQuery, cloud storage) may be performed using rules or schemas to split the data packet in the database. The transaction data in the block may be stored in a tree-like structure such as a Merkle tree. As another example, the block may be stored in one or more Avro™ block files in the Apache Avro™ format which is described in the paper by Hukill, G. S., & Hudson, C. (2018) entitled: "Avro: Overview and Implications for Metadata Processing".

In such embodiments, the step of unpacking may comprise unpacking the block into a plurality of stages and performing outer joins between the plurality of stages to obtain a table comprising the one or more rows of input and output data for the first transaction.

In one embodiment, where the digital currency is bitcoin, the step of unpacking the block in the block chain is performed by creating multiple schemas to house the various sub-levels of the Bitcoin dataset. This unpacking or unnesting is the result of unwinding the Avro™ block files into a standard table. In this process, the following steps are performed:

- Unpack the NoSQL format data into staging table.
- Unpack each level into individual stages.
- The Primary table is the SCHEMA.DATASET.btc_block_stg and this performs outer joins with the remaining stages to extract the unnested information into a single table.

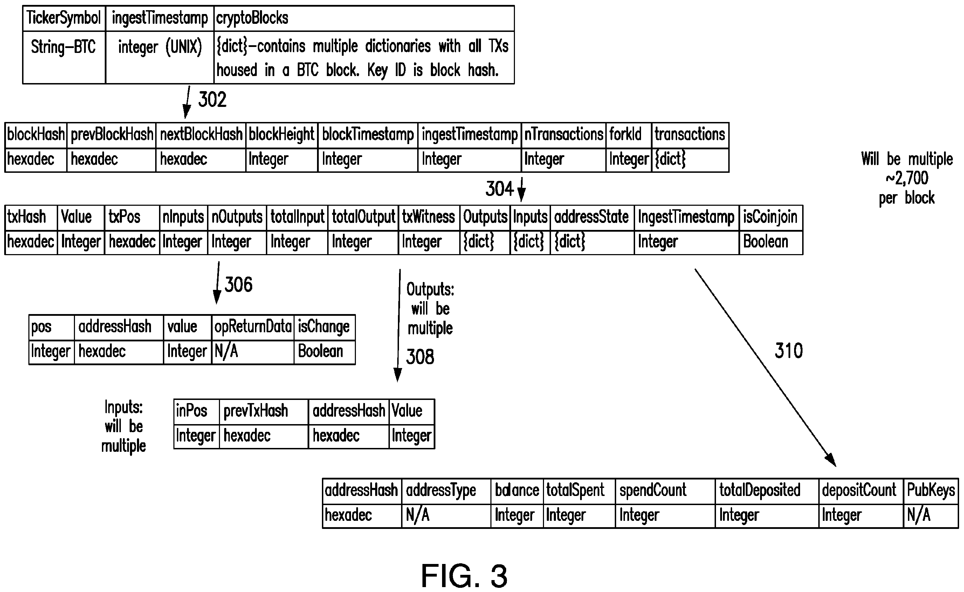

Fig. 3 shows an example process of unpacking Avro files containing data in the NoSQL format. In the example in Fig. 3, the first level of unpacking 302 gives 9 columns, where column name transactions comprise multiple sub-columns (Dictionary format/NoSQL), so this first level of unpacking unpacks to the block level data.

The next stage of unpacking 304 gives transactions in the block (as listed in column names) Outputs, Inputs, and address State. Again, there may be multiple sub-columns (these are in the dictionary format/NoSQL).

The final unpacking occurs in steps 306, 308, 310 of Outputs, Inputs and address state (which will be multiple, as there will be multiple Inputs, multiple Outputs and associated address state data with each of those).

Thus, in this example, the unpacking is performed the following flow: Avro file (No SQL format) -> Block Level Data -> Transaction Level Data- > Input Transactions, Output Transaction, Input Transaction State Data, Output Transaction State Data. So, this unpacking gives four staging tables - block, block-txInputs, block-txOutputs, block-addressState.

To summarise, the cryptobloc houses the core information and the purpose of step 202 in the bitcoin embodiment is to unpack the avro files to the transactional data level. As noted above, this unpacking may comprise e.g. expanding data held in the dictionary format into a tabular form. The unpacking process results in a table that includes a row for each element of the array in the non-SQL data contained in the database. The table obtained from the unpacking of the non-SQL data includes an indication, or identification of whether a row corresponds to an input or an output in the transaction. Appendix I shows an illustrative example of the table obtained from the unpacking of the DataFrame in an embodiment where the digital currency stored in the blockchain is Bitcoin.

Turning back to the method 200, generally, in step 202, the information related to the second transaction of the first funds that preceded the first transaction are obtained. From any individual transaction it is possible to obtain a history of five other transactions that preceded it, as all inputs have a previous transaction hash identifier providing the connections. Thus, other transaction(s) involving the same funds (e.g. the same particular bitcoins, for example) can be identified using the previous transaction identifier.

The transaction preceding the first transaction (e.g. the second transaction) may be described as a neighbouring transaction or "hop". Transactions further up in the chain (preceding the first transaction) may be described as second-hop, third-hop or fourth-hop transactions depending on the degree of separation between a transaction and the first transaction. It will be appreciated that, because each transaction may involve more than one input and more than one output, the first funds may have been derived from more than one neighbouring transaction. In other words, the first funds may have been derived from more than one addressee or wallet and thus there may be more than one branch of transactions that feed individual items of currency into the first funds.

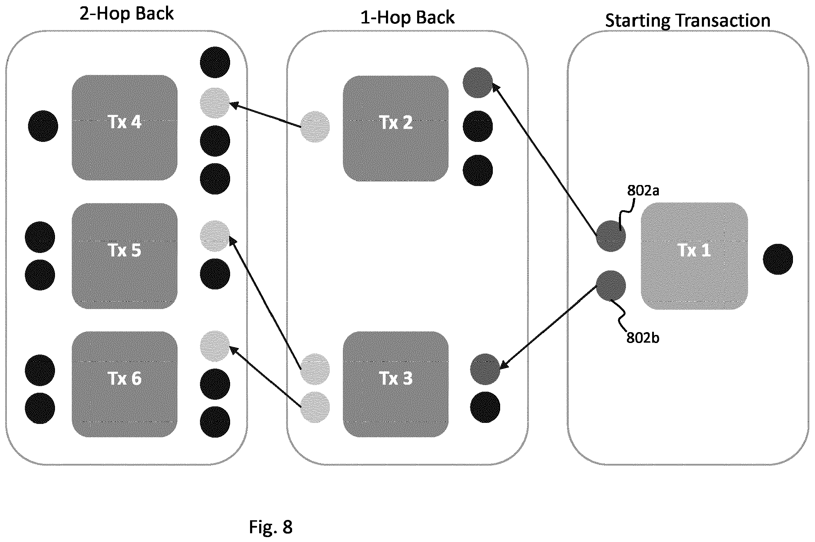

Fig. 8 shows an example transaction Tx1 involving first funds 802a and 802b. Looking back one transaction based on the current inputs is referred to herein as a hop. In this example, two hops back from transaction 1 (Tx 1) are illustrated. This follows two inputs to Tx 1 and maps back to find the originating source of the funds.

In the example in Fig. 8, the digital currency is bitcoin and the funds involve two bitcoins, 802a and 802b. In this example, bitcoin 802a came through a sequence of transactions involving transaction Tx2 and Tx4 and bitcoin 802b came through a sequence of transactions involving transactions Tx3, Tx5 and Tx6. Thus, in this example the transaction data may comprise information e.g. on the inputs and or outputs of any of Tx2, Tx3, Tx4, Tx5 and Tx6.

In some embodiments, the second transaction of the first funds immediately preceded the first transaction. In other words, the second transaction may be one "hop" back from the first transaction (which in the example of Fig. 8 would correspond to Tx2 and/or Tx3). In other embodiments, the transaction data comprises information related to two or more transactions of at least a portion (if the funds came from different wallets) of the first funds that preceded the first transaction. In other words, the second transaction may be two hops back from the first transaction (corresponding to Tx 4, Tx5 or Tx6 in Fig. 8).

In some embodiments, the transaction data for the first transaction may further comprise information related to all transactions within one hop of the first transaction for the first funds. In other embodiments, the transaction data for the first transaction may further comprise information related to all transactions within two hops of the first transaction for the first funds.

Information on neighbouring transactions allows wider information on the first transaction to be gathered in order to determine if there has been illicit activity. The information on the second transaction can comprise an indication (e.g. such as a flag, probability or score) of whether the second transaction is associated with any illicit/fraudulent entities. In some embodiments, the information on the second transaction can comprise the input and/or output rows of transaction data for the second transaction. In some embodiments, the information on the second transaction can comprise an indication of whether the second transaction is associated with any illicit/fraudulent entities and the input and/or output rows of transaction data for the second transaction (e.g. all available information for the second transaction.)

In some embodiments, the information related to the second transaction of the first funds indicates whether the second transaction involved at least one entity involved in fraudulent activity. For example, the information may comprise a flag indicating whether the second transaction (or any of the other transactions within two hops of the first transaction) involved wallets or entities known to be involved in fraudulent activity, or whether the second transaction (or any of the other transactions within two hops of the first transaction) was processed by an exchange known to be involved in fraudulent activity.

Compiling neighbouring transaction data in this manner can be computationally expensive. To save on computing power, in some embodiments, two backward hops are performed for each historical transaction in the dataset. This is merely an example, however and more hops can equally be used if more computing power is available.

The unpacked cryptocurrency blocks may result in thousands of rows, due to each transaction in the blockchain comprising multiple inputs and outputs. The volume of data associated with a transaction can make it computationally too expensive for many heuristic methods to process a transaction in real-time as part of a verification process.

Thus, in embodiments herein, in step 202 the one or more rows of input and output data may be aggregated to form an aggregated row of transaction data for the first transaction. The transaction data unpacked from the DataFrame can be aggregated or compressed in a manner that reduces the number of features in the data to a size that is more manageable for use in machine-learning, thus enabling efficient processing and analysis of the data. Both the transaction data related to the first transaction and the transaction data related to the second transaction that preceded the first transaction may be aggregated.

Thus, after the data is unpacked (e.g. from a non-SQL database), the one or more rows of input and output transaction data may be aggregated to form an aggregated row of transaction data for the first transaction. Compression of the first data in this manner enables analysis and decision making based on the data, while also allowing different levels of granularity to be customised based on the specific requirements of the data and also while preventing any loss in information contained in the unnested data.

The one or more rows of input and output data may be aggregated into a single row of data. In other embodiments, the one or more rows of input and output data may be aggregated into two rows of data, a first row comprising an aggregation of the inputs to the transaction and a second row comprising an aggregation of the outputs of the transaction. It will be appreciated that these are merely examples, and that the one or more rows of input and output data may equally be aggregated to produce more than two rows of aggregated data.

The aggregation (or compression) may be performed in different ways. For example, in some embodiments, a statistical aggregation of each field (or feature) in the one or more rows is taken. In this sense, a statistical aggregation may be any one or any combination of, a count, average, median, mean, mode, standard deviation, or range of the values in the one or more inputs and outputs of the transaction. It will be appreciated that these are merely examples however and that other functions may equally be applied to combine the values in a field.

It will also be appreciated that different types of statistical aggregation may be performed on different fields. For example, the values of a first field may be aggregated using a first function (e.g. selected from a count, average, median, mean, mode, standard deviation, or range) and a second field may be aggregated using a second function (e.g. selected from a count, average, median, mean, mode, standard deviation, or range). The aggregation condenses the information within a transaction, reducing computational costs of processing the data, without incurring significant loss of information.

Appendix II shows an example of the different functions that may be used to aggregate different fields of input and output data in an embodiment where the digital currency stored in the blockchain is bitcoin.

In the example in Appendix II, creation of the Aggregated Transaction Table follows a similar process to that of the creation of the granular transaction table formed by the unpacking of the data. The aggregated table has functions applied to the underlying data on the same stages to extract the information and create a single line transaction table. The short formula column shows the type of formula applied. The process may be summarized in the following steps:

- Unpack the NoSQL format data into staging table.
- Unpack each level into individual stages.
- The Primary table is the SCHEMA.DATASET.btc_block_stg and this performs outer joins with the remaining stages to extract the unnested information into a single table.
- The joins are performed through functions to assemble the aggregated transaction table.

To calculate the aggregated neighbourhood transaction information (e.g. the transaction information relating to the second transaction), a separate staging table can be created which is then joined with the aggregated transaction table. Appendix III contains example feature formulas.

Process:

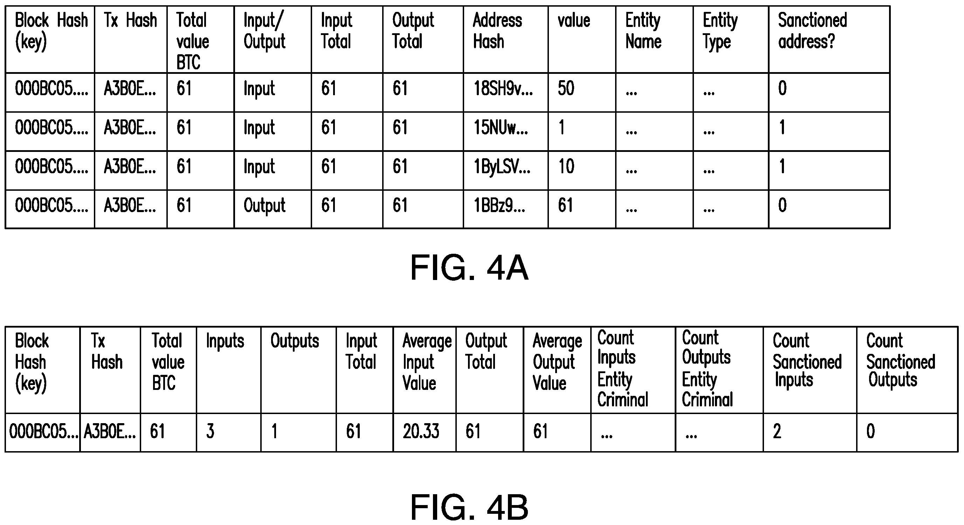

- Unpack the NoSQL format data into staging table.
- Unpack each level into individual stages.
- New stage is created which captures the neighbourhood transaction information (which have otherwise been referred to herein as hops).
- The hop features are calculated in formulas which extract information from the required stages to build up information on each individual transaction.The final aggregated table further comprises a label field (illicit flag) which in this example, is manually assigned to the transaction based on the underlying entities assigned to the address labels (e.g. obtained using a heuristic method such as cipher trace), using the rule: if any of the following flags = 1, then the illicit label is set = 1 → dark market, mixer, gambling, high risk exchange, criminal, ransomware, sanctioned. This is explained in more detail below with respect to step 206.
- In this embodiment, example inputs to step 204 are shown in Fig. 4a and an example output aggregated transaction data is shown in Fig. 4b.
- There are approx. 100 features in total per transaction.

Although aggregation or compression of the data has been described above, it will be appreciated that the transaction data doesn't have to be aggregated and that it is equally possible to train a machine learning model to take all fields of transaction data for the historical transaction and the second transaction of the first funds as input.

Turning back to the method 200, in step 204, the method comprises labelling the transaction data (or the aggregated row of transaction data if an aggregation is performed as described above) for the first transaction according to whether the first transaction was fraudulent. The labelling may be performed in any known manner. For example, a heuristic method may be used to label the data as fraudulent or not fraudulent.

In one embodiment, a binary flag is used (e.g. "0" being non-fraudulent and "1" being fraudulent, or vice-versa) as a label to denote whether the first transaction is fraudulent or not.

A binary flag may be set based on whether any of the underlying entities assigned to the address labels are known to be associated with fraudulent activity. In one example, a binary flag is set so as to indicate the first transaction is fraudulent if any of the addresses in the one or more input and output rows of transaction data for the second transaction are associated with the darkmarket, a high risk exchange, criminal activity, ransomware or sanctioned entities.

In one example, a tool such as CipherTrace™ is used to label the first transaction. For example, the flags output by CipherTrace™ may be combined into a single binary flag. It will be appreciated that CipherTrace ™ is merely an example however and that any other tool for heuristically labelling the first transaction as fraudulent or non-fraudulent might equally be used.

It will further be appreciated that these are merely examples, and that other methods of labelling the first transaction may equally be used. For example, the label may be in the form of a probability or other score.

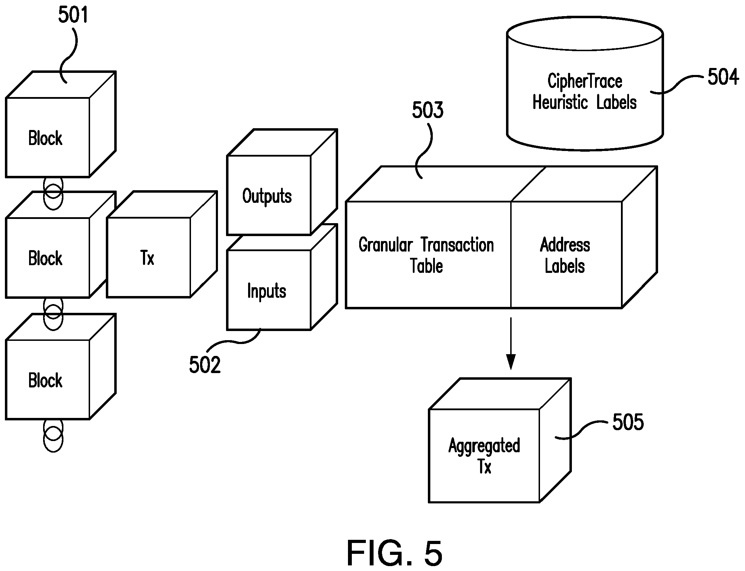

Fig. 5 shows an example method according to some embodiments herein. In step 501 a block in the blockchain is obtained (e.g. from the cloud, as described above) is unpacked to unravel the transactions housed therein. In step 502, the transactions are unpacked to unravel the outputs and inputs housed. In step 503 the inputs and outputs are placed in a large transaction table, using Transaction ID as the Primary Key. Transaction Data for Neighbouring Transactions is also added using the previous transaction hash identifier providing the connections. In step 504, the data is combined with another data source such as CipherTrace™ as described above, to label the input and output rows of transaction data as fraudulent or non-fraudulent. In step 505, in this embodiment, the labelled inputs and outputs are aggregated into a single line of aggregated transaction data. This aggregation can significantly reduce the computational cost.

Turning back to Fig. 2, in step 206 of the method 200, the transaction data for the first transaction and the associated label is then used as (a piece of) training data with which to train a model using a machine learning process. The model is trained to take the transaction data as input and use the label as the ground-truth or "correct" output for the first transaction. It will be appreciated that the steps 202-204 may be performed many times on many different transactions in order to build up a training dataset with which to train the model.

The skilled person will be familiar with machine learning and methods of training a model using a machine learning process. But in brief, a model, which may otherwise be referred to as a machine learning model may comprise a set of rules or (mathematical) functions that can be used to perform a task related to data input to the model. Models may be taught to perform a wide variety of tasks on input data, examples including but not limited to: determining a label for the input data, performing a transformation on the input data, making a prediction or estimation of one or more parameter values based the input data, or producing any other type of information that might be determined from the input data.

In supervised machine learning, the model learns from a set of training data comprising example inputs and corresponding ground-truth (e.g. "correct") outputs for the respective example inputs. Generally, the training process involves learning weight values of the model so as to tune the model to reproduce the ground truth output for the input data. Different machine learning processes are used to train different types of model, for example, machine learning processes such as back-propagation and gradient-descent can be used to train neural-network models.

The model herein may generally be any type of machine learning model that can be trained to take a row of transaction data (e.g. alpha-numeric strings) as input and output a prediction (e.g. a binary flag, percentage, or score). Examples include but are not limited to: neural network models, linear regression models and decision tree models. In some embodiments herein, the model is a tree-based model such as a Light Boosted Gradient Machine (LGBM) model.

LGBM is a fast method of tree-based computational modelling, particularly when applied to a large dataset. A gradient boosting machine (GBM) is an ensemble of weaker tree-based learners. It uses an iterative machine learning process to reduce a loss function which is a measure of the predicted output (in an initial pass through the GBM) versus the ground truth score. This is done by changing the data point weighting. A trained model has weights assigned to it, and then a test dataset has the same weights applied to predict or classify a target class. An LGBM is an enhanced version of a standard GBM which can handle massive amounts of data. This is highly suitable for the embodiments described herein which may deal with large numbers (e.g. millions) of rows.

LGBM is well-suited to the embodiments herein as it is highly scalable with large amounts of data, and can handle large amounts of data in short time. In production, it can meet Service Level Agreement (SLA) deadlines and result in better performance than many other baseline models.

Experimental Data

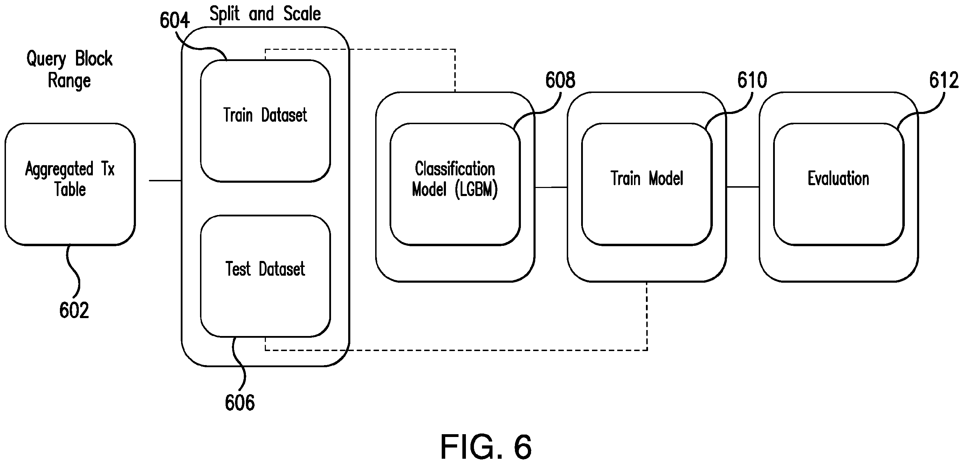

In an experiment, the method 200 was performed on historical bitcoin data as proof of concept. The training of the model in the experiment was performed according to the steps illustrated in Fig. 6 which shows the model pipeline. The data is preprocessed minimally by scaling the data into a min/max range between (0,1) for all features. The block range queried on Bitcoin was from January 1st, 2022, to March 31st, 2022. The training dataset used was transactions from January 2022 and February 2022. The test/validation dataset was transactions from March 2022.

To get an idea of the impact of the quality of the features related to the addition of the neighboring transaction data of the transaction(s) preceding each transaction, two versions of the model were trained.

A baseline model was trained without any neighboring transaction data, for comparison. A second version of the model was then trained using the neighbourhood 2-hop aggregation information.

The amount of data and date ranges in which the transactions occurred are summarized in the Table in Appendix IV.

The model used was an LGBM, as described above. LGBM is an open source framework. It is a gradient boosting framework that uses tree-based learning algorithms. It is designed to be distributed and efficient, with advantages such as faster training speed, lower memory usage, increased capability to handle large-scale data, etc. At the time of writing, the documentation for LGBM can be found at this weblink: https://lightgbm.readthedocs.io/en/v3.3.2/

In this experiment, the LGBM classifier was used - https://lightgbm.readthedocs.io/en/latest/pythonapi/lightgbm.LGBMClassifier.html It was found that a suitable model could be trained using the default (initialisation) parameters described in the cited documentation.

Training of the machine learning model followed a procedure as illustrated in Fig. 6., in which the aggregated training data (compiled according to the steps of Fig. 5 above) is split to estimate the performance of the machine learning algorithm when making predictions on data not used to train the model. The splitting procedure comprises of dividing the data available into two datasets, where one part of the dataset 606 is used to evaluate or test the model and the other part of the dataset 604 is used to train the model. This procedure is particularly appropriate when using large datasets.

Each machine learning model used was trained with part of the dataset, where the dataset used to train the model contained only the information related to the inputs and outputs of the transactions, (and did not include as input data, the historical labelled data that identifying entities associated with illegal or fraudulent activities). Once each machine learning model 608 had been trained 610, it was then tested with another dataset, and the results of the tests were then evaluated 612.

To assess the performance of the trained model, metrics were used which capture the accuracy of the model at identifying illicit transactions.

Accuracy may be described using the following formula:

$$Accuracy = \frac{correctly\ classified\ transactions}{total\ transactions}$$

Precision is a metric which evaluates the model's performance of the transactions it labels illicit and determines how many of those transactions are correctly assigned illicit (True Positive) against falsely assigned illicit (False Positive). Precision may be defined using the following formula:

$$Precision = \frac{true\ positive}{true\ positive + false\ positive}$$

Recall is a metric which evaluates the model's performance of the transactions it labels illicit (True Positive) and measures how many of the illicit transactions were captured by the model by comparing it against illicit transaction labelled licit (False Negative).

$$Recall = \frac{true\ positive}{true\ positive + false\ negative}$$

F1-score is the harmonic mean of precision and recall. It is a single metric that allows for evaluation of a model's performance of balancing false positives and false negatives. The closer to 1.0, the better the performance.

$$F1 - score = 2 * \left( \frac{precision * recall}{precision + recall} \right)$$

The accuracy of the LGBM on the January 2022 and February 2022 data obtained is illustrated in Appendix V which shows a summary of the difference in the accuracy metrics between the baseline version of the model trained in the same way (and on the same data set) but not including the neighbouring transaction data, and the model trained on all information on the neighbouring transactions (e.g. trained according to the method 200 above) is given in Appendix V.

Thus, there is disclosed herein a method of training a model using a machine learning process, to label (e.g. classify or predict) whether transaction data relating to a transaction of a digital currency stored in a blockchain is fraudulent. Although the examples above have largely been described using bitcoin as an example, it will be appreciated that the same techniques may equally be applied to other digital currencies stored in blockchains.

It will be appreciated that the output of the method 200, e.g. the trained model may be used to predict whether a new transaction (e.g. a transaction that wasn't used to train the model) of funds (referred to herein as "second" funds) is fraudulent. For example, the method 200 may further comprise steps of obtaining transaction data for the new transaction and information related to a third transaction of the second funds that preceded the new transaction, and obtaining a prediction of whether the new transaction is fraudulent using the model. A new transaction may be a pending transaction, such as a transaction that is in the process of being authorised. As such, if the model predicts that the new transaction is fraudulent, then the new transaction may be frozen for further processing. In this way, the model may be used in real time to assess transactions and prevent fraudulent transactions from taking place. This is advantageous over previous (heuristic) methods that generally are too slow to be used in this manner.

There may also be a method of using a model trained using the process outlined in Fig. 2, the method comprising using said model to predict whether a new transaction is fraudulent. The method of use may further comprise, for example, freezing the new transaction or flagging the new transaction for further follow up if the transaction is predicted to be fraudulent.

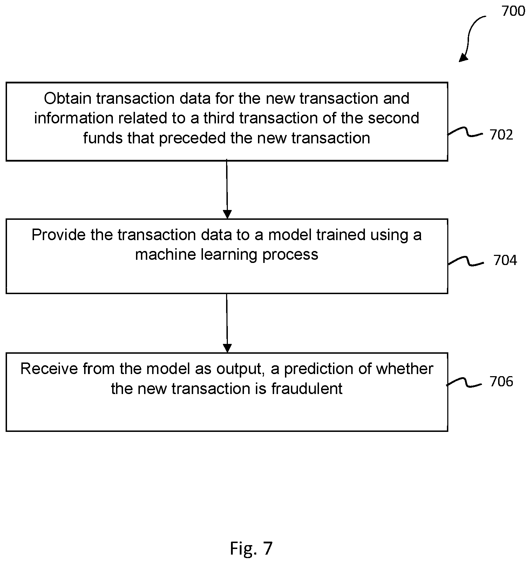

Turning now, to Fig. 7 which illustrates a method of predicting whether a new transaction of second funds of a digital currency stored in a blockchain is fraudulent according to some embodiments. The method 700 is computer implemented and may be performed by a node such as the node 100 above. The method 700 may be performed by the same node that performed the method 200 above. Alternatively, the method 700 may be performed by a different node to the node or nodes that performed the method 200.

In some embodiments the method 700 may be performed by an exchange as part of an authorisation procedure, or a KYC procedure.

Briefly, in a first step 702, the method 700 comprises obtaining transaction data for the new transaction and information related to a third transaction of the second funds that preceded the new transaction. In a second step 704, the method 700 comprises providing the transaction data to a model trained using a machine learning process. In a third step 706, the method 700 comprises receiving from the model as output, a prediction of whether the new transaction is fraudulent.

In more detail, in the method 700 the new transaction may be a pending transaction. In step 702 transaction data for the new transaction is obtained (such as, for example, input and output rows of transaction data for the new transaction as described above) are obtained and information related to a third transaction of the second funds that preceded the new transaction are also obtained. In this sense, the third transaction is a neighboring transaction for the new transaction, e.g. a transaction of the same funds that preceded the new transaction (e.g. is further up in the chain of transactions).

In a live system transaction data for the new transaction, and transaction data for the third (neighbouring) transaction may be obtained in different ways (e.g. depending on how a service or product incorporating the method 700 is implemented).

For example, in embodiments where the method 700 is implemented in an exchange e.g. as a real-time service then the new or pending transaction will not yet have been added to the blockchain, and so current information (e.g. the transaction information that is proposed to be added to the ledger) may be used as the transaction data for the new transaction (e.g. without any unpacking being performed).

In other embodiments, if the method 700 may be used as a batch-based system e.g. to flag transactions retrospectively after the new transactions have been completed. In such embodiments, all the transaction data may be obtained and analysed periodically (e.g. at a set frequency) to obtain output as to which transactions are flagged as illicit. Action may subsequently be taken e.g. for the addresses from where those transaction were initiated (freezing, blacklisting etc.). In such embodiments, the transaction data may be downloaded from the ledger e.g. from GoogleCloud and unpacked in the manner described above with respect to Fig. 2.

In this way, the method 700 can be run in a periodic manner to give e.g. a list of fraudulent transaction and addresses (say every night). Or it can be run in a real-time service e.g. for use by exchanges.

In the embodiments described above (e.g. live usage in an exchange and/or batch processing), the transaction data for the third transaction (e.g. the Neighbourhood Data) can be obtained in real-time by querying the cloud (if the blockchain transaction data is stored in cloud) or by querying the corresponding storage system to obtain the neighbourhood transaction data.

Transaction data was described above with respect to the method 200 and the detail therein will be appreciated to apply equally to the method 700. In step 704 the rows of input and output data for the new transaction and the third transaction may be aggregated in the same manner as was described above with respect to step 202 of the method 200.

In step 704, the transaction data for the new transaction and the transaction data for the third transaction is provided as input to a model trained using a machine learning process and in step 706 the model provides as output the prediction of whether the new transaction is fraudulent. The model in steps 704 and 706 may have been trained using the method 200 described above, and the detail therein will be understood to apply equally to the method 700.

Thus, in use, the model output from the method 200 may be used to predict or label whether a pending transaction is fraudulent.

A prediction obtained from the machine learning model identifying a transaction as illicit or fraudulent may be used to 'freeze' the pending payment. Alternatively, or additionally, the prediction of the machine learning model that a transaction is illicit or fraudulent may be used to provide at least one of the following: the illicit transaction information to law enforcement; share the information with other exchanges to prevent user from conducting further illegal activity on other platforms; freeze the transaction and request additional KYC (Know-Your-Customer) and AML (Anti-Money Laundering) checks before allowing them to conduct further transactions; freeze the assets associated with the account and the assets involved in the transaction; suspending the associated user account or blacklisting the user and associated wallet address.

In this way, the method 700 may be used to stop or freeze potentially fraudulent payments in real-time.

Turning now to another embodiment, there is also provided a computer program product comprising a computer readable medium, the computer readable medium having computer readable code embodied therein, the computer readable code being configured such that, on execution by a suitable computer or processor, the computer or processor is caused to perform the method or methods described herein, such as the method 200 and/or the method 700.

Thus, it will be appreciated that the disclosure also applies to computer programs, particularly computer programs on or in a carrier, adapted to put embodiments into practice. A program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person.

The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at runtime. The main program contains at least one call to at least one of the sub-routines. The subroutines may also comprise function calls to each other.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. Alternatively, more than one processor or other unit may jointly perform aspects of a single function recited in the claims.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner. Any reference signs in the claims should not be construed as limiting the scope.

## Appendix I

| | |
|---|---|
| SCHEMA.DATASET.btc_block_stg | tickerSymbol |
| | btcBlock_ingestTimestamp |
| | blockHash |
| | prevBlockHash |
| | nextBlockHash |
| | blockHeight |
| | blockTimestamp |
| | cryptoBlock_ingestTimestamp |
| | nTransactions |
| | forkId |
| | txHash |
| | txValue |
| | txPos |
| | nInputs |
| | nOutputs |
| | totalInput |
| | totalOutput |
| | txWitness |
| | tx_ingestTimestamp |
| | isCoinjoin |
| SC H E M A. D ATAS ET. btc_b l ockJxO utp uts_stg | txOutputs_pos |
| | txOutputs_addressHash |
| | txOutputs_value |
| | txOutputs_op Return Data |
| | txOutputs_isChange |
| Manual Condition | Is_Output (0,1) |
| SCHEMA.DATASET.btc_block_txInputs_stg | txInputs_pos |
| | txInputs_addressHash |
| | txInputs_value |
| | txInputs_opReturnData |
| | txInputs_ischange |
| Manual Condition | Is_Input (0,1) |
| | txAddressState_addressHash |
| | txAddressState_addressType |
| | txAddressState_balance |
| | txAddressState_totalSpent |
| SCHEMA.DATASET.btc_block_addressState_ stg | txAddressState_spendCount |
| | txAddressState_totalDeposited |
| | txAddressState_depositCount |
| | txAddressState_pubKeys |

**Appendix II**

| Source | | Short Formula | Long Formula |
|--------|--|---------------|--------------|
| SCHEMA.DATASET.btc block stg | tickerSymbol | | |
| | btcBlock ingest-Timestamp | | |
| | blockHash | | |
| | prevBlockHash | | |
| | nextBlockHash | | |
| | blockHeight | | |
| | blockTimestamp | | |
| | cryptoBlock ingestTimestamp | | |
| | nTransactions | | |
| | forkId | | |
| | txHash | | |
| | txValue | | |
| | txPos | | |
| | nInputs | | |
| | nOutputs | | |
| | totalInput | | |
| | totalOutput | | |
| | txWitness | | |
| | tx ingestTimestamp | | |
| | isCoinjoin | | |
| SCHEMA.DATASET.btc block stg | count - unique input addresses in txHash | count | btc block stg(nInputs)-unique(btc block stg(nInputs)) |
| SCHEMA.DATASET.btc block stg | count - unique output addresses in txHash | count | btc block stg(nOutputs)-unique(btc block stg(nOutputs)) |
| Manual | count - number of input and output with same address hash | count | Compare list of unique inputs vs unique outputs -> if anv are equal, count |
| SCHEMA.DATASET.btc block txInputs stg | count - recurring input addresses in input txHash | count | |
| SCHEMA.DATASET.btc block txOutputs stg | count - recurring output addresses in output txHash | count | |
| SCHEMA.DATASET.btc block txInputs stg | average - input value in txHash | average | btc block stg(totalInput)/btc block stg(nIn-puts) |

(continued)

| Source | | Short Formula | Long Formula |
|---|---|---|---|
| SCHEMA.DATASET.btc block txOutputs stg | average - output value in txHash | average | btc block stg(totalOutput)/btc block stg(nOutputs) |
| SCHEMA.DATASET.btc block txInputs stg | standard deviation - input value in txHash | st.dev | |
| SCHEMA.DATASET.btc block txOutputs stg | standard deviation - output value in txHash | st.dev | |
| SCHEMA.DATASET.btc block txInputs stg | median - input value in txHash | median | |
| SCHEMA.DATASET.btc block txOutputs stg | median - output value in txHash | median | |
| SCHEMA.DATASET.btc block txInputs stg | minimum - input value in txHash | min | |
| SCHEMA.DATASET.btc block txOutputs stg | minimum - output value in txHash | min | |
| SCHEMA.DATASET.btc block txInputs stg | maximum - input value in txHash | max | |
| SCHEMA.DATASET.btc block txOutputs stg | maximum - output value in txHash | max | |
| SCHEMA.DATASET.btc block txInputs stg | count - number of recurring input value in txHash | count | |
| SCHEMA.DATASET.btc block txOutputs stg | count - number of recurring output value in txHash | count | |
| SCHEMA.DATASET.btc block txInputs stg | arrav - all input addresses in txHash | list | |
| SCHEMA.DATASET.btc block txOutputs stg | array - all output addresses in txHash | list | |
| SCHEMA.DATASET.btc block txInputs stg | count - 2 decimal place round input value | count | if input value rounded to decimal places with recurring zeroes, count +1 |
| SCHEMA.DATASET.btc block txOutputs stg | count - 2 decimal place round output value | count | if output value rounded to decimal places with recurring zeroes, count +1 |
| SCHEMA.DATASET.btc block addressState stg | average - address balance in txHash | average | |
| SCHEMA.DATASET.btc block addressState stg | average - address total spend in txHash | average | |
| SCHEMA.DATASET.btc block addressState stg | average - address total spend count in txHash | average | |

(continued)

| Source | | Short Formula | Long Formula |
|---|---|---|---|
| SCHEMA.DATASET.btc block addressState stg | median - address balance in txHash | median | |
| SCHEMA.DATASET.btc block addressState stg | median - address total spend in txHash | median | |
| SCHEMA.DATASET.btc block addressState stg | median - address total spend count in txHash | median | |
| SCHEMA.DATASET.btc block addressState stg | standard deviation - address balance in txHash | st.dev | |
| SCHEMA.DATASET.btc block addressState stg | standard deviation - address total spend in txHash | st.dev | |
| SCHEMA.DATASET.btc block addressState stg | standard deviation - address total spend count in txHash | st.dev | |
| Cluster Dataset (Cipher-Trace) | transaction includes santcioned address | binary flag | if any address isSanctioned = 1, then flag = 1 |
| Cluster Dataset (Cipher-Trace) | transaction includes Dark Market Entity | binary flag | if any address entity type = 'dark market', then flag =1 |
| Cluster Dataset (Cipher-Trace) | transaction includes Mixer Entity | binary flag | if any address entity type = 'Mixer', then flag = 1 |
| Cluster Dataset (Cipher-Trace) | transaction includes Gambling Entity | binary flag | if any address entity type = 'Gambling', then flag = 1 |
| Cluster Dataset (Cipher-Trace) | transaction includes High Risk Exchange Entity | binary flag | if any address entity type = 'High Risk Exchange', then flag = 1 |
| Cluster Dataset (Cipher-Trace) | transaction includes ATM Entity | binary flag | if any address entity type = 'ATM', then flag = 1 |
| Cluster Dataset (Cipher-Trace) | transaction includes Criminal Entity | binary flag | if any address entity type = 'Criminal', then flag = 1 |
| Cluster Dataset (Cipher-Trace) | transaction includes Ransomware Entity | binary flag | if any address entity type = 'Ransomware', then flag = 1 |
| Cluster Dataset (Cipher-Trace) | transaction has no known entities | binary flag | if all addresses entity type = 'unknown', then flag = 1 |
| Cluster Dataset (Cipher-Trace) | transaction Entity Name Known | binary flag | if any address entity name != NULL , then flag = 1 |
| Cluster Dataset (Cipher-Trace) | count santcioned address flag = 1 in tx | count | |

(continued)

| Source | | Short Formula | Long Formula |
|---|---|---|---|
| Cluster Dataset (Cipher-Trace) | count Dark Market Entity in tx | count | |
| Cluster Dataset (Cipher-Trace) | count mixer entity in tx | count | |
| Cluster Dataset (Cipher-Trace) | count Gambling Entity in tx | count | |
| Cluster Dataset (Cipher-Trace) | count high risk exchange in tx | count | |
| Cluster Dataset (Cipher-Trace) | count ATMs in tx | count | |
| Cluster Dataset (Cipher-Trace) | count criminal entities in tx | count | |
| Cluster Dataset (Cipher-Trace) | count ransomware entities in tx | count | |
| Cluster Dataset (Cipher-Trace) | count no known entities in tx | count | |
| Cluster Dataset (Cipher-Trace) | count entity name known in tx (not null) | count | |
| Cluster Dataset (Cipher-Trace) | array - all input entity names in txHash | list | |
| Cluster Dataset (Cipher-Trace) | array - all output entity names in txHash | list | |
| Cluster Dataset (Cipher-Trace) | array - all input entity types in txHash | list | |
| Cluster Dataset (Cipher-Trace) | array - all output entity types in txHash | list | |
| Manual | Illicit/Licit Flag | binary flag | If any of the following flaus = 1; then the illicit label = 1 ---> dark market, mixer, gambling, high risk exchange, criminal, ransomware, sanctioned |

**Appendix III**

| Hop Features | Description |
|---|---|
| H_01_Count of Inputs | Captures number of inputs in all transactions in that hop |
| H 01 Count of Outputs | Captures number of outputs in all transactions in that hop |
| H 01 Sum of Input Value | Sums all input value in that hop |
| H 01 Sum of Output Value | sums all output value in that hop |
| H 01 Count Txs In Hop | This tells us number of Txs in current hop |

(continued)

| Hop Features | Description |
|---|---|
| **H 01 Count Unique Txs In_Hop** | **This tells us number of unique Tx hashes in current hop - we can have two inputs coming from the same transaction.** |
| **H 01 Count Recurring Txs In Hop** | **This tells us number of recurring Tx hashes in current hop - we can have two inputs coming from the same transaction.** |
| **H 01 Avg inputs of Txs** | **Average number of inputs for each Tx** |
| **H 01 Avg outputs of Txs** | **Average number of outputs for each Tx** |
| **H 01 Avg input value of Txs** | **Average inputs value for each Tx** |
| **H 01 Avg output value of Txs** | **Average outputs value for each Tx** |
| **H 01 count illicit flags of unique input addresses** | **Count all illicit flags that are 1 or Y in the inputs** |
| **H 01 count illicit flags of unique output addresses** | **Count all illicit flags that are 1 or Y in the outputs** |

## Appendix IV

| Month (2022) | Total Transaction | Illicit Transaction | Class Imbalance |
|---|---|---|---|
| January | 8,233,012 | 835,855 | 10.15% |
| February | 6,505,435 | 622,706 | 9.57% |
| March | 7,964,328 | 731,425 | 9.18% |

## Appendix V

| Metric | Model | Value |
|---|---|---|
| Accuracy | Initial Model | 0.92 |
| | Updated Model | 0.93 |
| Precision | Initial Model | 0.81 |
| | Updated Model | 0.80 |
| Recall | Initial Model | 0.20 |
| | Updated Model | 0.39 |
| F1-Score | Initial Model | 0.32 |
| | Updated Model | 0.53 |

## Claims

1. A computer implemented method of training a model, using a machine learning process, to predict whether a transaction of a digital currency stored in a blockchain is fraudulent, the method comprising:

   obtaining (202) transaction data for a first transaction of first funds in the digital currency, wherein the transaction data further comprises information related to a second transaction of the first funds that preceded the first transaction;

labelling (204) the transaction data for the first transaction according to whether the first transaction was fraudulent; and
using (206) the transaction data and the label as training data with which to train the model.

2. A method as in claim 1 wherein the second transaction of the first funds immediately preceded the first transaction.

3. A method as in claim 1 or 2 wherein the transaction data comprises information related to two or more transactions of at least a portion of the first funds that preceded the first transaction.

4. A method as in any one of the preceding claims wherein the information related to the second transaction of the first funds indicates whether the second transaction involved at least one entity involved in fraudulent activity.

5. A method as in any one of the preceding claims wherein the second transaction is identified using a previous transaction hash identifier to link the first transaction to the second transaction.

6. A method as in any one of the preceding claims wherein the transaction data is stored in a tree-like structure and wherein the step of obtaining (202) comprises:

   unpacking a block in the blockchain into a table comprising one or more rows of input and output data for the first transaction stored in the block;
   aggregating the one or more rows of input and output data to form an aggregated row of transaction data for the first transaction.

7. A method as in claim 6 wherein the step of unpacking a block in the blockchain comprises:

   unpacking the block into a plurality of stages; and
   performing outer joins between the plurality of stages to obtain a table comprising the one or more rows of input and output data for the first transaction.

8. A method as in claim 7 wherein the step of performing outer joins comprises:

   using the SCHEMA.DATASET.btc_block_stg table as the primary table; and
   performing outer joins to the stages in the plurality of stages to extract unnested information from the block into the table.

9. A method as in claim 6, 7, or 8 wherein:
   the block is stored in the NoSQL format.

10. A method as in any one of claims 6 to 9 wherein the step of aggregating (202) the one or more rows of input and output data comprises combining the one or more rows into a single row, by taking a statistical aggregation of values of each field in the respective rows of input and output data.

11. A method as in any one of the preceding claims wherein the step of labelling (204) is based in part on whether an addressee listed in the transaction data is known to be involved in fraudulent activity.

12. A computer implemented method for predicting whether a new transaction of second funds of a digital currency stored in a blockchain is fraudulent, the method comprising:

   obtaining (702) transaction data for the new transaction and information related to a third transaction of the second funds that preceded the new transaction;
   providing (704) the transaction data to a model trained using a machine learning process; and
   receiving (706) from the model as output, a prediction of whether the new transaction is fraudulent.

13. A method as in claim 12 wherein the model was trained according to the method of any one of claims 1 to 11.

14. A method as in claim 12 or 13, wherein the method is performed by an exchange and wherein the new transaction is an incoming transaction that has not yet been added to the blockchain.

15. A method as in claim 14 wherein the method comprises freezing the new transaction if the prediction is indicative of a fraudulent transaction.

16. A method as in any one of claims 12, 13, 14, or 15 wherein the transaction data comprises one or more rows of input and output data for the new transaction and the method further comprises aggregating the one or more rows of input and output data by combining the one or more rows into a single row, by taking a statistical aggregation of values of each field in the respective rows of input and output data.

17. A method as in any one of claims 12 to 16 wherein the third transaction of the second funds immediately preceded the new transaction.

18. A method as in any one of claims 12 to 17 wherein the transaction data comprises information related to two or more transactions of at least a portion of the second funds that preceded the new transaction.

19. A method as in any one of claims 12 to 18 wherein the information related to the third transaction of the second funds indicates whether the third transaction involved at least one entity involved in fraudulent activity.

20. A method as in any one of claims 12 to 19 wherein the third transaction is identified using a previous transaction hash identifier to link the new transaction to the third transaction.

21. A method as in any one of the preceding claims wherein the model is a tree-based model.

22. A method as in claim 21 wherein the tree-based model is Light Boosted Gradient Machine, LGBM.

23. A method as in any one of the preceding claims wherein the digital currency is based on the Unspent Transaction Output, UTxO design.

24. A node in a computing network for training a model, using a machine learning process, to predict whether a transaction of a digital currency stored in a blockchain is fraudulent, wherein the node is configured to:

   Obtain transaction data for a first transaction of first funds in the digital currency, wherein the transaction data comprises information related to a second transaction of the first funds that preceded the first transaction;
   label the transaction data for the first transaction according to whether the first transaction was fraudulent; and
   use the transaction data and the label as training data with which to train the model.

25. The node as in claim 24 wherein the node is further configured to perform the method of any one of claims 2 to 23.

26. A node in a computing network for training a model, using a machine learning process, to predict whether a transaction of a digital currency stored in a blockchain is fraudulent, the node comprising:

   a memory (104) comprising instruction data representing a set of instructions; and
   a processor (102) configured to communicate with the memory and to execute the set of instructions, wherein the set of instructions, when executed by the processor, cause the processor to:

      obtain transaction data for a first transaction of first funds in the digital currency, wherein the transaction data comprises information related to a second transaction of the first funds that preceded the first transaction;
      label the transaction data for the first transaction according to whether the first transaction was fraudulent; and
      use the transaction data and the label as training data with which to train the model.

27. The node as in claim 26 wherein the node is further configured to perform the method of any one of claims 2 to 23.

28. A node in a computing network for predicting whether a new transaction of second funds of a digital currency stored in a blockchain is fraudulent, wherein the node is configured to:

   obtain transaction data for the new transaction and information related to a third transaction of the second funds that preceded the new transaction;
   provide the transaction data to a model trained using a machine learning process; and

receive from the model as output, a prediction of whether the new transaction is fraudulent.

29. The node as in claim 28 wherein the node is further configured to perform the method of any one of claims 13 to 23.

30. A node in a computing network for predicting whether a new transaction of second funds of a digital currency stored in a blockchain is fraudulent, the node comprising:

a memory (104) comprising instruction data representing a set of instructions; and
a processor (102) configured to communicate with the memory and to execute the set of instructions, wherein the set of instructions, when executed by the processor, cause the processor to:

obtain transaction data for the new transaction and information related to a third transaction of the second funds that preceded the new transaction;
provide the transaction data to a model trained using a machine learning process; and
receive from the model as output, a prediction of whether the new transaction is fraudulent.

31. The node as in claim 30 wherein the node is further configured to perform the method of any one of claims 13 to 23.

32. A computer program product comprising a computer readable medium, the computer readable medium having computer readable code embodied therein, the computer readable code being configured such that, on execution by a suitable computer or processor, the computer or processor is caused to perform the method as claimed in any one of claims 1 to 23.

100

Processor 102

Memory 104

Instructions 106

FIG. 1

200

Obtain transaction data for a first transaction of first funds
in the digital currency, wherein the transaction data
comprises information related to a second transaction of
the first funds that preceded the first transaction

202

Label the transaction data for the first transaction
according to whether the first transaction was fraudulent

204

Use the transaction data and the label as training data
with which to train the model

206

**Fig. 2**

| TickerSymbol | ingestTimestamp | cryptoBlocks |
|---|---|---|
| String—BTC | integer (UNIX) | {dict}—contains multiple dictionaries with all TXs housed in a BTC block. Key ID is block hash. |

↓ 302

| blockHash | prevBlockHash | nextBlockHash | blockHeight | blockTimestamp | ingestTimestamp | nTransactions | forkId | transactions |
|---|---|---|---|---|---|---|---|---|
| hexadec | hexadec | hexadec | Integer | Integer | Integer | Integer | Integer | {dict} |

Will be multiple
~2,700
per block

304 ↓

| txHash | Value | txPos | nInputs | nOutputs | totalInput | totalOutput | txWitness | Outputs | Inputs | addressState | IngestTimestamp | isCoinjoin |
|---|---|---|---|---|---|---|---|---|---|---|---|---|
| hexadec | Integer | hexadec | Integer | Integer | Integer | Integer | Integer | {dict} | {dict} | {dict} | Integer | Boolean |

↓ 306

Outputs:
will be
multiple

308

310

| pos | addressHash | value | opReturnData | isChange |
|---|---|---|---|---|
| Integer | hexadec | Integer | N/A | Boolean |

Inputs:
will be
multiple

| inPos | prevTxHash | addressHash | Value |
|---|---|---|---|
| Integer | hexadec | hexadec | Integer |

| addressHash | addressType | balance | totalSpent | spendCount | totalDeposited | depositCount | PubKeys |
|---|---|---|---|---|---|---|---|
| hexadec | N/A | Integer | Integer | Integer | Integer | Integer | N/A |

FIG. 3

| Block Hash (key) | Tx Hash | Total value BTC | Input/ Output | Input Total | Output Total | Address Hash | value | Entity Name | Entity Type | Sanctioned address? |
|---|---|---|---|---|---|---|---|---|---|---|
| 000BC05.... | A3B0E... | 61 | Input | 61 | 61 | 18SH9v... | 50 | ... | ... | 0 |
| 000BC05.... | A3B0E... | 61 | Input | 61 | 61 | 15NUw... | 1 | ... | ... | 1 |
| 000BC05.... | A3B0E... | 61 | Input | 61 | 61 | 1ByLSV... | 10 | ... | ... | 1 |
| 000BC05.... | A3B0E... | 61 | Output | 61 | 61 | 1BBz9... | 61 | ... | ... | 0 |

## FIG. 4A

| Block Hash (key) | Tx Hash | Total value BTC | Inputs | Outputs | Input Total | Average Input Value | Output Total | Average Output Value | Count Inputs Entity Criminal | Count Outputs Entity Criminal | Count Sanctioned Inputs | Count Sanctioned Outputs |
|---|---|---|---|---|---|---|---|---|---|---|---|---|
| 000BC05... | A3B0E... | 61 | 3 | 1 | 61 | 20.33 | 61 | 61 | ... | ... | 2 | 0 |

## FIG. 4B

EP 4 481 655 A1

FIG. 5

FIG. 6

700

Obtain transaction data for the new transaction and information related to a third transaction of the second funds that preceded the new transaction

702

Provide the transaction data to a model trained using a machine learning process

704

Receive from the model as output, a prediction of whether the new transaction is fraudulent

706

Fig. 7

Fig. 8

Europäisches
Patentamt

European
Patent Office

Office européen
des brevets

# EUROPEAN SEARCH REPORT

**Application Number**

EP 23 18 0178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/067738 A1 (FANG CHUNSHENG VICTOR [US] ET AL) 3 March 2022 (2022-03-03) <br> * abstract * <br> * paragraph [0002] * <br> * paragraph [0031] – paragraph [0087] * <br> * paragraph [0269] – paragraph [0307] * | 1-32 | INV. <br> G06Q20/02 <br> G06Q20/06 <br> G06Q20/38 <br> G06Q20/40 |
| A | US 2022/101326 A1 (KIM HYUNG WOO [SG] ET AL) 31 March 2022 (2022-03-31) <br> * the whole document * | 1-32 | |
| A | GALICI ROBERTA ET AL: "Applying the ETL Process to Blockchain Data. Prospect and Findings", <br> INFORMATION, <br> vol. 11, no. 4, 10 April 2020 (2020-04-10) , page 204, XP093100367, <br> DOI: 10.3390/info11040204 <br> * the whole document * | 1-32 | |

**TECHNICAL FIELDS SEARCHED (IPC)**

G06Q

The present search report has been drawn up for all claims

| Place of search | Date of completion of the search | Examiner |
|---|---|---|
| The Hague | 20 November 2023 | Diepstraten, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  .........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 0178

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2023

| Patent document cited in search report | | | Publication date | Patent family member(s) | | Publication date |
|---|---|---|---|---|---|---|
| US 2022067738 | A1 | | 03-03-2022 | NONE | | |
| US 2022101326 | A1 | | 31-03-2022 | KR | 20210014155 A | 08-02-2021 |
| | | | | SG | 11202107662T A | 30-08-2021 |
| | | | | US | 2022101326 A1 | 31-03-2022 |
| | | | | WO | 2020149790 A1 | 23-07-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NOFER, M.** ; **GOMBER, P.** ; **HINZ, O. et al.** Blockchain. *Bus Inf Syst Eng*, 2017, vol. 59, 183-187
- **ATZEI, N.** ; **BARTOLETTI, M.** ; **LANDE, S.** ; **ZUNINO, R.** *A Formal Model of Bitcoin Transactions*, 2018
- UTxO- vs Account-Based Smart Contract Blockchain Programming Paradigms. Leveraging Applications of Formal Methods, Verification and Validation: Applications
- Lecture Notes in Computer Science. Springer, 2020, vol. 12478

- **BÖHME, RAINER** ; **NICOLAS CHRISTIN** ; **BENJA-MIN EDELMAN** ; **TYLER MOORE**. Bitcoin: Economics, Technology, and Governance. *Journal of Economic Perspectives*, 2015, vol. 29 (2), 213-38
- **SATOSHI NAKAMOTO**. *Bitcoin: A Peer-to-Peer Electronic Cash System*, 31 October 2008
- Google BigQuery. **BISONG, E.** Building Machine Learning and Deep Learning Models on Google Cloud Platform. Apress, 2019
- **S. P. T. KRISHNAN** ; **JOSE L. UGIA GONZALEZ**. *Building Your Next Big Thing with Google Cloud Platform. A Guide for Developers and Enterprise Architects*
- **HUKILL, G. S.** ; **HUDSON, C.** *Avro: Overview and Implications for Metadata Processing*, 2018